# EUROPEAN PATENT APPLICATION

(11) **EP 1 867 242 A1**
(43) Date of publication of application: **19.12.2007**
(21) Application number: 07386006.6
(22) Date of filing: 09.03.2007
(51) Int. Cl.: A23L 1/314, A23K 1/16, A23K 1/18

(54) **Production method of meat-based products with direct and indirect incorporation of plant and animal fatty substances as carriers of omega-3 and omega-6 fatty acids**

(30) Priority: 17.03.2006 GR 20060100169
(71) Applicant: VI.K.I. S.A.-KTINOTROFIA KAI BIOMICHANIA KREATOS IPEIROU S.A., 47100 Arta (GR)
(72) Inventor: Papagiannis, Nikolaos Dim., 47100 Arta (GR)
(74) Representative: Androutsopoulos, Christos K.

(57) **Abstract**

This method has applications in the salt pork industry and is based on the use of three different and new technological process and procedures for the incorporation and assimilation of omega-3 and omega-6 polyunsaturated fatty acids in the products.

The processes regard the use of either a liposomic system, or a special emulsifier or the feeding of pigs with the proper feed. The advantages of the aforementioned new method is, on one hand, the substitution of animal fat with other fatty acids, beneficial to human health and, on the other hand, that the new products, in comparison to those produced with the traditional method, avoid the phenomenon of deoilization, are of more stable quality and with enhanced organoleptic qualities, as well as macroscopic, microbiological and chemical standards.

## Description

The present method regards the production of meat-based products with main characteristics:
1. The use of vegetable and animal fatty substances, in salt pork and other meat products, as carriers of omega-3 and omega-6 polyunsaturated fatty acids, instead of the addition of animal fat, which was the usual production practice, without affecting the traditional taste of the produced salt pork and meat products, while at the same time achieving the production of products rich in the aforementioned (omega-3 and omega-6) fatty acids, which have been proven as extremely beneficial to human nutrition, as described in detail lower.
2. The use of lean skeletal muscle tissue (meat).
3. The maximum preservation of physicochemical structures of the meat proteins in their original state.
4. The achievement of maximum possible preservation of the organoleptic characteristics of meat.
5. The addition of special aid substances allowed for use by the Food and Drink Code.
6. The application of new technological processes and procedures as described in specific chapters and which were developed with the aim of:
   a) the direct incorporation of the aforementioned vegetable and animal substances in the new products, substitution of the animal fat containing saturated fatty acids with other fatty substances containing polyunsatured fatty acids, necessary for human nutrition and, at the same time, beneficial, as presented later in the text.
   b) The achievement of solid and stable mixture of fatty substances and meat of stable constitution, capable of being subjected to the proper heat treatment, with the goal of achieving complete connection and homogeneity of the aforementioned fatty substances in the new meat emulsion after the coagulation of proteins.
   c) The achievement of the maximum possible preservation of organoleptic and physicochemical characteristics, as well as the enhancement of the nutritional characteristics of the new product, owing to the addition of the new factor which regards the perfect incorporation of the fatty substances (of our company's choice) which are rich in content of the aforementioned polyunsaturated fatty acids (omega-3 and omega-6).

The originality of the aforementioned method and the resulting products focuses on the following two main points:
I. The idea and recipe which are a global innovation by their own right.
   **Ia)** The basic idea lies in the use of fatty substances rich in polyunsaturated fatty acids (omega-3 and omega-6), for the production of salt pork, instead of the use of animal fat, which has received accusations of being a damaging nutritional element and mainly responsible for its detrimental effects, mainly in the cardiovascular system, and heart disease. Our concern that the sector of the salt pork industry would continue to decline due to the attacks by the medical science, initially led us to the production of low-fat (light) products and later to the production of products in which as much animal fat as possible was substituted for other fatty substances, less detrimental if at all, and, if possible, beneficial to the human organism.
      Therefore, we sought other fatty substances, approved by the food code, which contain polyunsaturated fatty acids, which were recommended by medical research conducted mainly in the USA, as well as Europe, for the substitution or restriction of animal fats in nutrition.
      In this way, we were led to the idea of producing new products, which will bode well in human nutrition and which will, in our opinion, replace the traditional salt pork and meat products.

### Polyunsaturated fatty acids

Polyunsaturated fatty acids are defined as the fatty acids with 18-22 carbon atoms and 2-6 double bonds. Polyunsaturated fatty acids are distinguished in omega-6 and omega-3, according to the distance of the first double bond of their molecule from the final methyl end. Several vegetable oils are sources of omega-6 polyunsaturated fatty acids, while omega-3 polyunsaturated fatty acids are to be found mostly in fish oils. Linoleic acid, (LA), g-linoleic acid (GLA) and arachidonic acid (AA) belong to the omega-6 group, while a-linoleic acid (ALA), eicosapentaenoic acid (EPA) and docosahexaenoic acid (OHA) belong to the omega-3 group. LA, ALA and GLA are characterized as essential elements for man, as his organism cannot compose them. AA is released from the phospholipids of cellular membranes due to the activity of special enzymes and its metabolism leads to the composition of eicosanoid acids (proglastandins, thromboxanes, leukotrienes). The omega-3 fatty acids are necessary for the normal composition of sperm and cerebral lipids. These substances also show protective activity in the development of cardiovascular, inflammatory and malignant pathological conditions.

The scientific community had its first indications of the beneficial effects of omega-3 fatty acids in 1970, when Dutch scientists observed that the Escimoes had a remarkably low rate of cardiovascular diseases, despite the fact that their nutrition was very rich in fats. The continuation of this observation, proved that, in reality, their nutrition was extremely rich in EPA and OHA.

Recent research has confirmed that omega-3 fatty acids exert strong preventive action against atherosclerosis, cardiac infarction, arrhythmia, stroke, vascular lesions, angina, cardiac deficiency and coronary heart disease.

There is a vast amount of scientific bibliography correlating beyond doubt omega-3 fatty acids with these diseases and proving that they increase the elasticity and resilience of arterial walls, prevent blood thrombosis, reduce arterial blood pressure and stabilize the heart rate. Other clinical studies indicate that the systematic chronic ingestion of omega-3 fatty acid supplements leads to regression of atherosclerotic reserves in cardiac patients, reduces the danger of a second incident of heart attack or stroke and reduces the diastolic and systolic blood pressure to sufferers of high blood pressure.

Also, there has been substantial research with the aim of defining the possible effects of the ingestion of omega-3 fatty acids by people suffering from hyperlipidaemia (high total cholesterol, LDL or triglycerides). This research in its entirety shows that the daily ingestion of omega-3 fatty acids can result in reduction of triglycerides and cholesterol fraction in plasma (total and LDL), without leading to the reduction of good cholesterol (HDL), something that is frequent in hypolipidaemic diets.

Omega-3 fatty acids play an important role in the composition of cellular membranes and especially of those of the neural cells and the light receiving cells of the retina. A lack of DHA in the nutrition of laboratory animals seems to have as a result loss of sight. Also, the addition of DHA in prematurely born infants is believed to facilitate the restoration of sight. The human brain is one of the biggest consumers of DHA. The brain of a normal adult contains more than 20 gr of DHA. Lower levels have been related to an increased tendency towards depression, violence and suicide. A high consumption of fish and fish oils has been proven to be able to lead to a spectacular reduction of memory loss and cognitive function deterioration at an older age, as well as reduce the danger of Alzheimer's disease.

Other research has confirmed that countries with a high consumption of fish have to confront lower rates of manic aggressive people, while in a study conducted by the Harvard Medical School, fish oil supplements were successfully used in the treatment of schizophrenia.

A sufficient intake of DHA and EPA is particularly important during pregnancy and lactation, as the infant cannot compose them. There are signs that a deficient intake of omega-3 fatty acids by the mother, increases the risk of premature birth and low weight of the infant. Some researchers believe that preeclampsia (the occurrence of high arterial blood pressure in a pregnant woman) is connected to an OHA deficiency.

The so-called **Mediterranean** diet is of high biological value, specifically because it was rich in alpha-linoleic acid (ALA), which is related to a low incidence of coronary heart disease and certain types of cancer. Linseed oil also provides components that are characterized as **phytoestrogens**, which may also play a part in cancer prevention.

The related data of the recent bibliography, highlight the importance of a diet rich in omega-3 polyunsaturated fatty acids. It seems that omega-3 polyunsaturated fatty acids contribute to the prevention of fatal arrhythmia as well as cardiac infarction, by reducing the agglutination of blood platelets. Finally, enriching nurtrition with omega-3 polyunsaturated fatty acids exerts a beneficial effect on the factors contributing to coronary heart disease and especially post-prandial triglyceridaemia and hypertension. Consequently, the administration of omega-3 polyunsaturated fatty acids, may prove to be useful to the therapeutic approach to cardiovascular diseases.

However, the dietary habits of mostly western populations, include foods of low content in omega-3 fatty acids. Moreover, they are characterized by a high ratio of omega-6 to omega-3 polyunsaturated fatty acids, which is connected to the aforementioned pathological conditions. As it is difficult for dietary standards to change, the production of so-called functional foods could be a solution. These are foods, with specific dietary components (for example, omega-3 polyunsaturated fatty acids), which offer an important benefit to health.
**Ib)** The recipe regards the selection of the vegetable or animal fatty substances, so that they meet the aforementioned standards and according to their content in the aforementioned (omega-3 and omega-6) fatty acids, we created a composition which was the result of long-term research and adaptation.

**II.** By means of the aforementioned new recipe, the disadvantages of the traditional practice for the production of salt pork become advantages.

More specifically, salt pork produced with the common/conventional technology exhibit the phenomenon of de-oilization after the thermal processing and during their cooling. During boiling, there is a separation of the fat from the rest of the mass which, during the cooling of the product, is solidified between the surface of the product and the plastic case. **In contrast, oil emulsion** is better absorbed by the mass of meat and does not separate from it during the thermal processing of the products.

Moreover, with the common/traditional technology, there is the frequent phenomenon of some batches of salt pork having their mass not jelling uniformly, with the result of punctures in the interior, which are either empty or occasionally fill up with fat. In contrast, with the use of new technology the homogenization of the mixture is uniform and the phenomenon of punctures is not observed.

Finally, it should be noted that the organoleptic qualities of products created with the common technology depend directly on the quality of the raw material and especially the fat that is used for the production of emulsifier. Usually, common salt pork has a strong pork smell and taste and is soft during chewing. In contrast, the organoleptic qualities of the products created with the new technology are stable for the life period of the product. The oil emulsion has the ability of attributing salt pork with a smooth taste and a slightly crunchy texture during chewing.

In conclusion, we can say that with the aid of new technology, we can achieve stable quality during production of the batches of each product in comparison to similar products of the simple series of salt pork, in terms of their organoleptic qualities, as well as their macroscopic, microbiological and chemical standards.

### Production methodology of salt pork and other meat products with omega-3 and omega-6 polyunsaturated fats

The production in question was achieved with incorporation of vegetable and animal fatty substances as carriers of omega-3 and omega-6 fatty acids via three different methods: (a) with the use of a liposomic system, (b) with the use of an emulsifier, (c) through feeding pigs with feed rich in omega-3 and omega-6 fatty acids and the use of the produced meat and fat.

### (a) with the use of a liposomic system

In its present application, it is characterized by the incorporation of an edible and specialized liposomic system in the form of paste, consisting of structural materials allowed by the food code. More specifically, it consists of vegetable fatty acid derivatives, the selection and ratio of which is adjusted so as to keep the system unchanging to the demands of thermal processing (pasteurization) of salt pork products.

Liposomes are concentric fatty spheres with the membranes pushed to the exterior, thus creating an "empty" space in the centre, available for replenishing with any fatty load. The membranes approximate to the maximum degree the structure of the membranes of animal cells. They are literally artificial cells in terms of membrane structure and they are an extremely flexible system of capturing fatty loads. Their size is smaller than a micron. Their exterior surface is wholly hydrophilic and possesses electrostatic charges (result of the selection of structural materials) by which they create a stable grid to the end product.

The selected vegetable fats of our (VI.K.I.) choice and the incorporated omega-3 and omega-6 fatty acids, are supplied enclosed in the described liposomic system in the form of a paste by the producer-supplier in a certain percentage. The participation of this paste in the production takes place at the beginning of the process and at such a rate that satisfies the participation rates of fatty acids, omega-3 and omega-6 in the end product.

The production method includes the following stages:
a) Lean meat (at a temperature of 0°C) is mixed and cut with H2O (at a temperature of 0°C) as well as conservatives, spices, polyphosphates, etc.
b) Next, the liposomic paste (at a temperature of 0°C) is added and mixing continues until perfect homogenization is achieved and the temperature rises to 8°C.
c) Next, the mixture is led to filling equipment, where it is encased and then pasteurized at 73°C.
d) After pasteurization, the product is cooled in cooling chambers.

The total processing time depends on the diameter of the end product and varies between 1 and 3 hours.

The Thermal Processing programs are defined as the function of time and centre temperature for each product. Moreover, the time needed for achieving the desired centre temperature of a product depends directly on its diameter (caliber) as well as its constitution (if it's pure meat, meat with fat or mashed meat mixture). In order to define the final centre temperature, at which point the thermal processing program is complete, several measurements were taken on the premises of the company, which, during the application of the programs, measured the changes in F0 (logarithmic value of pathogenic microorganism death). Next, the products the F0 of which were measured were microbiologically analyzed (check for E.coli, Listeria monocytogenes, Total Mesophilic Flora, Staphylococcus, Salmonella). Based on the results of those measurements as well as the microbiological analyses, a special program of thermal treatment was adopted for each product group.

### (b) with the use of an emulsifier

Emulsification is the process during which two non-miscible liquids are mixed in such a way that one liquid is interspersed in tiny droplets inside the other which is the dispersion medium. In emulsions, one medium is fatty and the other is water. The fatty medium may consist of oils, wax carbohydrates, resins and other hydrophobic substances. The water medium is usually not just water, but a solution of salts or sugars and generally hydrophilic substances. In order to produce a stable emulsion, a third substance must be added, known as the emulsifier. When the water medium is the dispersion medium, the emulsion is of the oil-in-water type, whereas when the fatty medium is the dispersion medium the emulsion is of the water-in-oil type. Each one of the two types of emulsions presents the characteristics of the dispersion medium in terms of its ability to mix with other substances or dissolve components and electric conductivity.

In order to form an emulsion, the surface tensions which cause the consistency of each liquid must be vanquished and new contacts/interface must be created. The requested liquid is given to the system by subjecting it to vigorous stirring. The bigger the interfacial tensions, the more unstable the emulsion is. Reduction of the interfactial tension is achieved by the addition of an emulsifier. The molecule of the emulsifier has a polar and a nonpolar group. When it is added to the emulsion, it is absorbed by the interface with each of its groups directed towards the corresponding medium. Thus, it creates a layer that reduces the interfacial tension and prevents the junction of the material droplets that are in dispersion. The emulsifiers used are usually, proteins, phospholipids, esters of glycol, glycerol propylene and fatty acids, carboxymethylcellulose, etc.

For the production of an emulsion, the emulsifier is usually added to the material which will serve as the dispersion medium followed by the addition of the material of the non-dispersion medium during vigorous stirring. Stirring is performed by high-speed mixers, such as rotating blades or screws, when the liquids have a low viscosity, whereas for viscous mixtures, large metal rotating or non-rotating containers (pan mixers), containers with Z-shaped mixers or rotating containers of the type used for mixing solids (tumbler mixers) are used.

In this specific application, the oil mixture is introduced to the cutter where together with water and emulsifier it is stirred quickly until the creation of a homogenized mixture (fat emulsion). Next, the emulsion is placed in shallow and wide utensils, with a height of no more than 7-10 cm and placed in a refrigerator.

After cooling and prior to use, the emulsion is cut once more and then added to the original meat mass either in the cutter, the needling machine or the massage barrels.

Next, the production method includes the following stages:
a) Lean meat is mixed and cut (at a temperature of 0°C), with H2O (at a temperature of 0°C) as well as conservatives, spices, polyphosphates, etc.
b) Next, the emulsifier (at a temperature of 0°C) is added and stirring continues until perfect homogenization is achieved and the temperature rises to 8°C.
c) Next, the mixture is led to filling equipment, where it is encased and pasteurized at 73 °C.
d) After pasteurization, the product is cooled in cooling chambers.

The total time of the processing depends on the diameter of the end product and varies between 1 and 3 hours, according to the aforementioned under (a).

### (c) through feeding pigs with feed rich in omega-3 and omega-6 fatty acids.

In the nutrition of the pigs of the privately owned unit of the VI.K.I group, linseed, fish meal and/or fish oil, substances that are rich in omega-3 polyunsaturated fatty acids, were added. For stabilization of the unsaturated fatty acids, 100mgs of Vitamin E per kg of feed were added.

The addition of the aforementioned took place in different ratios in the feed during the following phases: before weaning, after weaning, during the preparatory feed phase and/or fattening phase. The consumed quantity of feed as well as the corresponding weights of the pigs were recorded every week.

At the end of the venture, the concentration of omega-3 fatty acids in the back fat of the pigs was measured and increased concentration of omega-3 fatty acids was noted. Next, the fat with increased polyunsaturates was used normally in the production of salt pork on its own or in combination with the aforementioned methods.

## Claims

1. Production method of meat-based products **characterized by** the incorporation of plant and animal fatty substances as carriers of omega-3 and omega-6 fatty acids instead of the traditional use of animal fat, which includes the following stages:
A) Lean meat is mixed and cut (at a 0°C temperature) as well as preservatives, spices, polyphosphates, etc.
B) Fat rich in omega-3 and omega-6 fatty acids is added.
C) Afterwards, the mixture is taken to filler machines where it is encapsulated and subsequently pasteurised at 73°C
D) After the pasteurisation, the product is cooled in cooling chambers.
The total time of the thermal processing depends on the diameter of the final product and ranges from 1 to 3 hours.

2. Production method of meat-based products according to Claim I, during the second stage of which liposomes of plant and animal fatty substances, rich in omega-3 and omega-6 fatty acids, are added at a temperature of 0°C and mixed until perfect homogenisation is achieved and the temperature rises to 8°C.

3. Production method of meat-based products according to Claim I, during the second stage of which emulsion of plant and animal fatty substances, rich in omega-3 and omega-6 fatty acids, are added through the use of an emulsifier.

4. Production method of meat-based products according to Claim I, in which the **produced fat and meat of pigs fed with a ration rich in omega-3 and omega-6 fatty acids** is used. This method includes the same stages as Claim I with the difference that animal fat is used as raw material, naturally rich in omega-3 and omega-6 fatty acids, due to the different nutrition of the pigs.

5. Production method of meat-based products according to Claim I, in which the incorporation of plant and animal fatty substances as carriers of omega-3 and omega-6 fatty acids is achieved through the combination of at least two of the previous methods.

6. The meat-based **products** (salt pork) incorporating omega-3 and omega-6, produced according to the production methods mentioned in Claims I-V are **characterised by** the incorporation of plant and animal fatty substances as carriers of omega-3 and omega-6 fatty acids instead of the traditional use of animal fat.
